# EUROPEAN PATENT APPLICATION

(11) **EP 0 627 276 A2**
(43) Date of publication of application: **07.12.1994**
(21) Application number: 94303363.9
(22) Date of filing: 10.05.1994
(51) Int. Cl.: B23K 20/12, F16B 11/00

(54) **Friction joining**

(30) Priority: 20.05.1993 GB 9310469
(71) Applicant: THE WELDING INSTITUTE, Abington Cambridge CB1 6AL (GB)
(72) Inventor: Needham, James Christopher, Saffron Walden, Essex (GB); Nicholas, Edward David, Haverhill, Suffolk CB9 0DH (GB); Thomas, Wayne Morris, Haverhill, Suffolk CB9 9NJ (GB)
(74) Representative: Skone James, Robert Edmund

(57) **Abstract**

An elongate first component (1) for friction joining to a second component (2) by urging the components together while causing relative heat generating movement between them. The first component has a leading portion (3) which enters the second component (2) in use and is connected to a trailing portion which abuts but does not enter the second component after joining. The penetration length of the leading portion is not less than, preferably substantially equal to, a lateral dimension of at least that part of the trailing section adjacent the second component after joining. In another example, the leading portion of the first component is provided with a plurality of re-entrant cavities.

## Description

This invention relates to methods of friction joining materials and to a component for use in such methods.

Friction welding is well known both for similar and for dissimilar materials where in particular, under compressive load and with suitable relative motion, the interface is heated until a plasticised layer is produced which on arrest of movement solidifies and joins the components in a solid phase bond.

Commonly friction welding is achieved between opposing bars or tubes under a common axial load and with relative rotation. In addition friction welding is obtained in a T geometry as in a stud to plate configuration where the stud is rotated and applied under load to the plate.

In WO 93/10935 published on 10 June 1993, we describe friction welding methods in some of which one of the components is plunged into the other component and remains in situ thereafter. These components have a small probe portion, or consist of a small bush, which is received in the other component.

In accordance with one aspect of the present invention, an elongate first component for friction joining to a second component by urging the components together while causing relative heat generating movement between them whereby the first component displaces heated material of the second component so that a leading portion of the first component enters into the second component, the displaced material of the second component being allowed to solidify around the leading portion of the first component, the leading portion being connected to a trailing portion which does not enter the second component after joining, the penetration length of the leading portion being not less than, preferably substantially equal to, a lateral dimension of at least that part of the trailing section adjacent the second component after joining.

This aspect of the invention leads to a particularly strong connection between the first and second components with a low electrical resistance in view of the particular relationship between the penetration length of the leading portion of the first component and the lateral dimension of the trailing section of the first component, at the surface of the second component.

In conventional friction welding, the mechanical and in particular the electrical performance is limited by the common cross-section of the mating surfaces which is substantially that of the bar, tube or stud concerned. With respect to electrical connections between conducting material such as aluminium and copper, the interface is more resistive than the parent materials and therefore local heating is developed at the interface. In the limit this reduces operating life since with the additional heating there is further growth of intermetallic products from the dissimilar material pair.

In accordance with a second aspect of the present invention, we provide a first component for friction joining to a second component by urging the components together while causing relative heat generating movement between them whereby the first component displaces heated material of the second component so that the first component enters into the second component, the displaced material of the second component being allowed to solidify around that portion of the first component which has entered the second component, the portion of the first component which enters the second component having a plurality of re-entrant cavities or a helical groove or equivalent crevice on its surface into which material of the second component is displaced in use.

Typically, an extended surface is provided between the mating materials of dimension or area significantly greater than that presented by the nominal butting sections. In one example the first component may be shaped in a cone arrangement. Preferably the cone is shaped on the harder material such that it is caused to penetrate into the soft material a significant distance such as a length equal to or greater than the diameter of the harder material.

The invention also provides a degree of mechanical interlock such that the plasticised material formed between the surfaces in relative motion under compression flows into suitable re-entrant cavities or helical grooves.

The re-entrant cavities can be provided in a variety of ways but preferably are regularly spaced, for example in the form of a saw tooth arrangement, or a rectangular groove.

In accordance with a third aspect of the present invention, we provide a first component for friction joining to a second component by urging the components together while causing relative heat generating movement between them whereby the first component displaces heated material of the second component so that the first component enters into the second component, the displaced material of the second component being allowed to solidify around that portion of the first component which has entered the second component, the portion of the first component which enters the second component being formed as a spigot defined by a wall whose thickness tapers away from the remainder of the body of the first member, such that during friction joining the wall of the spigot splays outwardly within the second component.

This arrangement not only provides an increased contact area between the first and second components over the use of a conventional, straight butt joint but also provides additional mechanical strength.

In accordance with a fourth aspect of the present invention, a method of friction joining first and second components in which the first component is in accordance with any of the first, second and third aspects of the invention comprises urging the components together while causing relative heat generating movement between them whereby the first component displaces heated material of the second component so that the first component enters into the second component, the displaced material of the second component being allowed to solidify around that portion of the first component which has entered the second component.

This method can be used for joining similar materials but it is particularly suited to the joining of dissimilar materials used for electrical conduction. A particular example is copper and aluminium.

Some examples of components and methods according to the invention will now be described with reference to the accompanying drawings, in which:-
Figures 1-4 are schematic, partial longitudinal sections through four examples of first components of copper or copper alloy according to the invention friction joined to an aluminium or aluminium alloy second component;
Figure 5 illustrates the components of Figure 3 just prior to the friction joining operation;
Figure 6 is a schematic, cross-section through a conductor rail having a cap secured by a method according to an example of the invention; and,
Figures 7A-7C illustrate three experimental configurations used to demonstrate the improved resistance characteristics of joints made according to the invention.

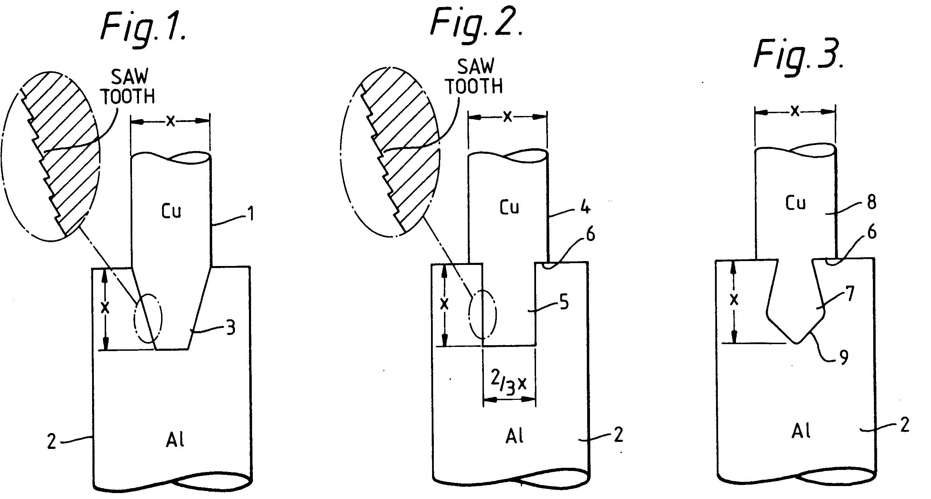

In the example shown in Figure 1, a copper rod (first) component 1 of cylindrical form with a diameter "x" is friction joined to a cylindrical, aluminium (second) component 2. The leading end 3 of the component 1 has a conical form with the surface of the cone formed into a saw tooth pattern as shown. The length of the conical portion 3 is at least substantially the same "x" as the diameter of the copper component 1. As can be seen, the copper component 1 is tapered to approximately half its diameter. In use, the copper component 1 is rotated and urged against the aluminium component 2 and is thus caused to penetrate into the aluminium component or rod (as shown).

The surface of the conical portion 3 of the copper rod 1 is serrated or grooved so that plasticised material from the aluminium flows into the re-entrant cavities so as to provide a mechanical interlock in addition to any metallurgical bonding between the materials. During frictioning aluminium material is displaced while the copper rod 1 is substantially unchanged so that after sufficient time the conical end 3 to the copper rod is fully penetrated into the aluminium bar. Some aluminium is displaced forming a collar around the copper rod but this generally does not contribute significantly to electrical conduction. To ease the interpenetration of the harder component into the softer the latter may be provided with a central re-entrant cavity (not shown) which is equal to or less than the diameter of the tip of the cone on the harder material. This will be described in conjunction with the Figure 3 example.

In another arrangement (Figure 2) a cylindrical, harder material component 4 is stepped down in section at 5 to provide a relatively long probe to penetrate into the softer material 2. Again, the stepped down portion is provided with re-entrant cavities or helical grooves to assist interlock. It is noted that in this case the plasticised material is further compressed by the shoulder 6 on the harder of the two components and this in turn assists the plasticised interlayer in entering the re-entrant grooves or notches.

In a preferred arrangement the probe portion 7 of the first component 8 is in the form of an inverted cone as shown in Figure 3. The front face of the cone may be suitably shaped or rounded as shown at 9 to assist penetration and again the shoulder 6 on the harder material allows the plasticised material from the interface to be forced into the re-entrant profile provided by the inverted cone. The probe portion 7 may also be provided with a saw tooth surface or grooved as in the Figures 1 and 2 examples.

For a simple cone as illustrated in Figure 1 the length of the cone should be sufficient to provide a conical surface substantially greater than that of the cross-section of the harder component. For example, if the diameter of the conical tip is half the diameter of the rod then the surface area of the cone equates to that of the cross-section of the rod when the length of the cone is one third of the major diameter. Conversely if the length of the cone is substantially equal to the diameter of the rod then the surface area of the cone is three times that of the cross-section of the copper rod itself. Therefore the electrical resistance presented by the interface between dissimilar metals in solid-phase bonding by the friction process is effectively reduced by increasing the cross-section to current flow.

For convenience the larger diameter softer material of relatively greater resistivity (as in the case of aluminium to copper transition joints) may be tapered off to match the diameter of the copper after welding.

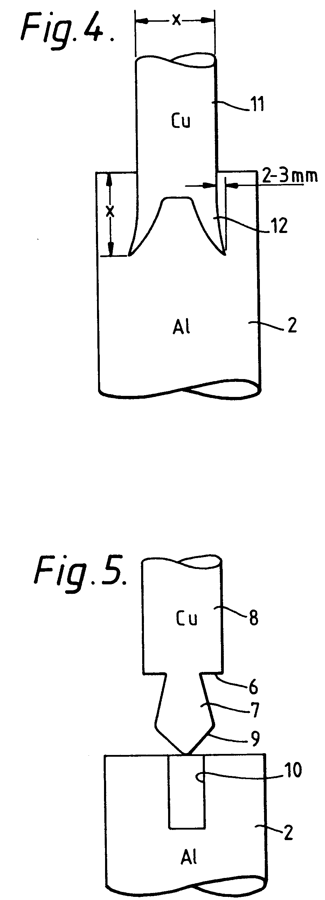

In some examples, the second component presents a flat face to the first component. In preferred examples, however, a central bore is provided in the second component. This is shown in Figure 5 which illustrates the Figure 3 example prior to the friction joining operation. As can be seen, a central bore 10 is provided in the aluminium component 2.

In the case of the Figure 5 example, a copper rod 8 20mm in diameter is provided with an inverted cone 7 ranging from 12mm to 15mm diameter i.e. between 60% and 75% of the largest rod diameter. This is rotated at any convenient speed between say 1000 and 2000rpm i.e. between about 0.8 and 1.6 m/s (at 15mm diameter) surface speed and particularly between 1250 and 1750rpm such as around 1500rpm and applied to the aluminium 2 under a load of 40 to 50kN i.e. between about 0.25 and 0.3 kN/mm², a probe length ("x") of 20mm is provided and the aluminium is pre-drilled with a 5mm diameter bore 10 extending some 17mm in depth. The aluminium may be of convenient conducting alloy such as 6082 (HE30) and of diameter greater than copper to equate in effective resistance per meter. For consistent performance, the friction welding machine is preferably operated at a constant rate of movement or penetration up to the point where the copper is in full contact with the aluminium alloy when the rotation is arrested and the weld and plasticised material allowed to consolidate. The load used for frictioning may be continued during this consolidation stage. In general no additional load is required to consolidate the joint.

Such transition joints as between copper and aluminium show an improved efficiency or lower overall resistance and increased life due to the lower operating temperature. Also any deterioration due to dis-bonding is reduced due to the mechanical interlock provided, again extending operating life.

In a further arrangement an intermediate conducting material may be used to increase the quality of the joint, either by reducing the resistance at the interface or increasing the operating life particularly at elevated temperatures, or both.

Equally the intermediate material may promote plastic flow especially in filling re-entrant cavities, interstices and the like.

One convenient method of providing such intermediate material is as a powder or granules carried in one or the other of the two main components being joined. For example, for the copper to aluminium connection shown in Figure 5 where the aluminium component 2 is counter-bored with a small hole 10 to facilitate the penetration of the copper, the holes can be partially filled with desired additional material in a fragmented form such as chippings.

In operation the copper probe portion 7 initially penetrates into the aluminium bar 2, but as the additional material is reached it forms part of the plasticised intermediate region. Thus the additional material serves to modify the properties of the overall transmission joint.

An example of suitable additional material for the copper/aluminium alloy (6082) joint is brazing alloy which can also be supplied as a soft metal plug in the drilled cavity.

A further example is illustrated in Figure 4 in which the end 12 of a copper component 11 is formed as an inverse cone or cup shape which on entering the softer, aluminium component 2 splays outwardly, as can be seen in the drawings. Typically, in the case shown of a 20mm penetration depth, the amount of splay is 2-3mm.

Another application of the technique according to the invention is in capping or re-surfacing electrical conductors with either the same material as the base conductor or more commonly a harder material to resist wear and tear and/or the effects of arcing due to intermittent contact. For this suitable holes are drilled in a cover plate and chamfered as desired to suit the shape of the stud used to plunge into the base material. The material displaced from the base serves to fill the space between the stud and the cover plate to ensure not only a good mechanical joint but also preferably a second metallurgical bond between the base material and the cover plate to give good electrical contact.

The overall electrical connection provided avoids the fretting corrosion often found with mechanical joints especially with dissimilar materials where there is differential expansion. It is noted that the stud itself need not be a good electrical conductor since the displaced material provides the conducting path to the cover plate directly.

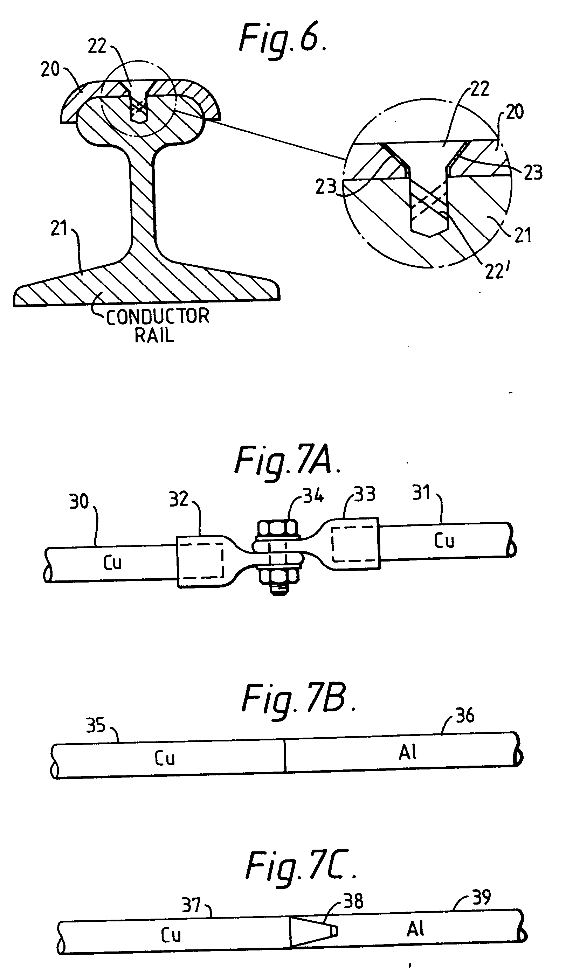

One example of the application is in heavy duty electrical engineering with sliding or arcing contact faces where wear and tear take place (Figure 6). To avoid surface damage or to replace previously damaged material a cover plate 20 is used with suitable mechanical properties for the arduous duty concerned. Good electrical connection is made between the cover plate 20 and a base conductor rail 21 using methods according to the invention. A plug 22 (similar to the component 1 of Figure 1 but with a helical groove 22') is plunged through the cover plate 20 into the rail 21. The material 23 displaced by the plug 22 serves to join the cover plate firmly to the base and in addition to provide electrical continuity between the base and cover plate. The stud or plug 22 can be of any suitable hard material sufficient to displace the base. In addition the tip of the stud 22 can be chamfered (as shown) to assist initial displacement or a preliminary pilot hole drilled in the base or both. Furthermore the stud can be fluted or grooved (as shown) to give a screw like action to help disperse the displaced material at the stud and around its head.

In one example a stainless steel rubbing plate is attached to an aluminium conductor rail. In other examples hard steel can be attached to conductor rail of low alloy steel or other suitable alloy.

Similar applications apply to heavy duty switch gear where after sliding contacts are parted an arc is caused to run up suitable guide surfaces driven either magnetically or by compressed air or both which surfaces are subject to considerable wear and tear and damage from the arcing prior to breaking the circuit.

In order to demonstrate the different electrical properties of mechanical (bolted) and friction joints (both conventional and according to an example of the invention) tests were made at a very low current density of the order of 0.06 A/mm² to avoid any heating effects on resistance measurements.

### Example 1

As shown in Figure 7A, two 15mm diameter copper rods 30,31 were soldered into respective tinned copper cable lugs 32,33 which were bolted together with a single 12mm diameter steel bolt 34 tightened to about 4 Kgm torque. The overall joint resistance was measured as 18 µΩ.

### Example 2

In this example, a conventional friction butt weld was formed between a 15mm diameter copper rod 35 and a 15mm aluminium rod 36 (Figure 7B). All excess flash was removed. The overall joint resistance was measured as 3.5 µΩ.

### Example 3

In this example, a copper rod 37 (Figure 7C) having an end 38 tapered to half its original diameter was joined to a 15mm diameter aluminium rod 39 using a method according to the invention. The tapered end 38 was plunged into the rod 39 to a depth equal to its largest diameter and all excess flash was removed. The overall resistance of the joint was measured as 2 µΩ.

From the above data and allowing for the resistance of the bars or rods, the interface resistances are believed to be in the order of around 6.7 µΩ (Example 1), 1 µΩ (Example 2) and 0.6 µΩ (Example 3). Thus, to a first approximation, the resistance of the friction plunge joint of Figure 7C is an order of magnitude lower than the corresponding bolted connection (Figure 7A).

## Claims

1. An elongate first component for friction joining to a second component by urging the components together while causing relative heat generating movement between them whereby the first component displaces heated material of the second component so that a leading portion of the first component enters into the second component, the displaced material of the second component being allowed to solidify around the leading portion of the first component, the leading portion which enters the second component in use being connected to a trailing portion which does not enter the second component after joining, the penetration length of the leading portion being not less than a lateral dimension of at least that part of the trailing section adjacent the second component after joining.

2. An elongate first component according to claim 1, wherein the trailing portion is substantially cylindrical, the said lateral dimension comprising the diameter of the trailing portion.

3. An elongate first component according to claim 1 or claim 2, wherein the penetration length of the leading portion is substantially equal to the lateral dimension of at least that part of the trailing section adjacent the second component after joining.

4. A first component for friction joining to a second component by urging the components together while causing relative heat generating movement between them whereby the first component displaces heated material of the second component so that the first component enters into the second component, the displaced material of the second component being allowed to solidify around that portion of the first component which has entered the second component, the portion of the first component which enters the second component having a plurality of re-entrant cavities, a helical groove, or equivalent crevice on its surface into which material of the second component is displaced in use.

5. A first component according to any of claims 1 to 3, wherein the portion of the first component which enters the second component has a plurality of regularly spaced re-entrant cavities or equivalent helical groove or crevice.

6. A first component according to claim 4 or claim 5, wherein the re-entrant cavities are formed in a saw tooth arrangement.

7. A first component according to any of the preceding claims, wherein the portion of the first component which enters the second component has a generally conically, inwardly shaped form.

8. A first component according to any of claims 1 to 6, wherein the portion which enters the second component has a generally conically, outwardly shaped form.

9. A first component according to claim 8, wherein the conically shaped portion has a diameter which ranges from about 60% to about 75% of the full diameter.

10. A first component according to any of claims 1 to 6, wherein the portion which enters the second component is substantially cylindrical.

11. A first component according to any of the preceding claims, wherein the portion which enters the second component has a length of substantially 20mm or greater.

12. A first component for friction joining to a second component by urging the components together while causing relative heat generating movement between them whereby the first component displaces heated material of the second component so that the first component enters into the second component, the displaced material of the second component being allowed to solidify around that portion of the first component which has entered the second component, the portion of the first component which enters the second component being formed as a spigot defined by a wall whose thickness tapers away from the remainder of the body of the first member, such that during friction joining the wall of the spigot splays outwardly within the second component.

13. A first component according to any of the preceding claims when joined to a second component.

14. A method of friction joining first and second components in which the first component is in accordance with any of the preceding claims, the method comprising urging the components together while causing relative heat generating movement between them whereby the first component displaces heated material of the second component so that the first component enters into the second component, the displaced material of the second component being allowed to solidify around that portion of the first component which has entered the second component.

15. A method according to claim 14, wherein the materials of the first and second components are different.

16. A method according to claim 15, wherein the first component comprises mainly copper and the second component comprises mainly aluminium.

17. A method according to any of claims 14 to 16, wherein the second component is formed with an aperture in the region of initial contact between the first and second components.

18. A method according to claim 17, wherein the aperture has a diameter which is not more than substantially half the lateral dimension of the leading end of the first component.

19. A method according to any of claims 14 to 18, wherein an intermediate, electrically conducting material is provided between the first and second components.

20. A method according to claim 19, when dependent on claim 17 or claim 18, wherein the intermediate, electrically conducting material is provided in the aperture.

21. A method according to claim 19 or claim 20, wherein the intermediate material comprises a brazing alloy.

22. A method according to any of claims 14 to 21, wherein the relative heat generating movement comprises a relative rotation.

23. A method according to claim 22, wherein the first component is rotated relative to the second component at a rate in the range between 0.8 m/s and 1.6 m/s.

24. A first component joined to a second component by a method according to any of claims 14 to 23.
